(19)

Europäisches
Patentamt
European
Patent Office
Office européen
des brevets

(11) **EP 2 058 139 A1**

(12) **EUROPEAN PATENT APPLICATION**

(43) Date of publication:
**13.05.2009 Bulletin 2009/20**

(21) Application number: **07120371.5**

(22) Date of filing: **09.11.2007**

(51) Int Cl.:
*B44D 3/00* *(2006.01)*       *B44D 3/12* *(2006.01)*
*F28D 20/02* *(2006.01)*      *C09K 5/06* *(2006.01)*

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicants:
• **Van Wijhe Verf B.V.**
  **8041 AL  Zwolle (NL)**
• **Bas van der Geest management B.V.**
  **7471 SX  Goor (NL)**

(72) Inventors:
• **Kokkeler, Laurien**
  **7522 CZ, Enschede (NL)**
• **Slag, Johannes Hendricus**
  **7521 BH, Enschede (NL)**

(74) Representative: **Swinkels, Bart Willem**
  **Nederlandsch Octrooibureau**
  **P.O. Box 29720**
  **2502 LS Den Haag (NL)**

(54) **Latent-energy heat control of paint viscosity**

(57)     The invention pertains to the use of phase change material (PCM) for heat-controlling the viscosity of paint for brush, pad or roller application. The invention also pertains to a solid body (1a,1b) for controlling the temperature of paint for brush, pad or roller application, said body containing phase change material (PCM), wherein said PCM is covered by a shell layer. The heat-controlling of the viscosity offers the advantage of higher-quality paint layers with improved visual appearance and avoids the necessity of adding additional solvent to reduce viscosity at reduced ambient temperatures. Moreover, heat-controlling the viscosity with PCMs is a highly reversible process, enabling the energy controlling body to be repeatedly recharged without significant degradation.

## Fig 1

EP 2 058 139 A1

## Description

FIELD OF THE INVENTION

The invention pertains to controlling the viscosity of brush-, pad- and roller-applicable paints, and to means for that purpose. Alternatively or additionally, the invention pertains to improving the visual appearance of paint layers applied at reduced or increased ambient temperatures.

BACKGROUND OF THE INVENTION

Painting and decorating at temperatures lower or higher than ambient room temperature can be bothersome, since the viscosity of paint strongly depends on its temperature. For example, for paints optimized to be used at 20°C a temperature drop of 5 degrees will result in a in viscosity increase of about 8 %. This renders the paint too sticky to enable proper application, resulting in streaks due to poor leveling and a general 'heavy' brush feeling. Although the viscosity can, to a certain extent, be decreased by the addition of solvent, this is generally not recommended, since the final paint layer will, after evaporation of solvents, appear thinner and of lower quality. Furthermore, the use of additional volatile organic compounds (VOCs) is not preferable from both health and ecological perspectives.

Alternatively, it is possible to heat the paint to reduce its viscosity. The temperature to which the paint is heated should be controlled within narrow limits, in order to attain a paint viscosity reduced to a fairly narrow, predetermined range resulting in a painting system capable of repeatedly delivering similar results.

There are numerous examples in the prior art of controlling the temperature and viscosity of paints and coating liquids to be applied under pressure with spray-coating equipment. Unfortunately, none of those are feasible to be applied to the field of brush-, pad- and roller-applied paints.

Obviously, considering the flexible nature of the painter's trade, any means of warming paint should not be directly dependent on relatively immovable heat supplies such as electrical heating plates, water baths or gas burners.

Many efforts have been directed in the art towards developing portable systems for maintaining objects at a specific temperature different from the ambient temperature of the environment. These systems include insulated, refrigerated or heated containers designed for the transport of e.g. foods, drugs and body organs. Heat is then generated by e.g. an exothermic chemical reaction proceeding in a separated heating element incorporated in the container. However, the chemical energy method is potentially hazardous due to the use of harmful chemicals and the lack of adequate temperature control, and has the inability to reverse completely.

Generally, latent energy released or taken up by so-called phase change materials (PCMs) has been found particularly suitable for controlling the temperature of fluid or fluid-containing substances. Due to their controlled energy-transfer properties, PCMs are capable of storing or releasing 5 to 14 times more energy per body volume than conventional (sensible) storage materials such as stone or wood.

PCMs have even found use in the house paints industry, for affecting the heat retentive properties of paint itself. US 4,825,939 discloses the incorporation of a polyethylene glycol PCM in a polyvinyl acetate latex paint with the aim of providing latent heat storage in building walls. US 6,373,058 discloses the addition of PCM-containing microcapsules to camouflage paint in order to alter its heat-emissive properties and thus reduce its visibility by infrared detectors. In these publications, the PCM forms an integrated component of the paint formulation, in direct contact with the paint. None of these publications deal with the aforementioned problems related to painting at lower or higher ambient temperatures.

Hence, a need exists for a portable, wireless, flexible and safe means for locally administering heat to or from the paint and maintaining the paint at a temperature corresponding to optimum viscosity and applicability.

SUMMARY OF THE INVENTION

Thus, it is an object of the present invention to provide a means of locally controlling the temperature of paint within a narrow temperature range different from the ambient temperature, in particular means for locally heating the temperature of paint. This offers the advantage of higher-quality paint layers and avoids the necessity of adding additional solvent to reduce viscosity at reduced ambient temperatures.

It is a further object of the present invention to provide a heat or cold source, alternatively named heat sink, that is capable of transferring heat or cold to a fluid in the near vicinity of the energy controlling body over prolonged times. Ideally, the painter and decorator should be able to take advantage of a fairly constant temperature control of the paint during at least 3 hours.

It is yet another object of the present invention to provide a heat source or sink that operates on a highly reversible process, enabling the energy controlling body to be repeatedly recharged without significant degradation. This would allow the painter to use the heat source / sink in an essentially infinite number of thermal cycles.

It has been found now by the inventors that the deviating viscosity of various paints due to low or high ambient temperatures can be positively influenced by the local and controlled addition of heat or cold to the paint container. Moreover, a better control of paint temperature has a beneficial effect of the visual appearance of the applied paint, irrespective of the temperature of the substrate.

It has also been found that one or more of the above objectives can be provided for using one or more phase change materials (PCMs). It is found that the PCM makes it possible to control the viscosity of paint in cold or hot environment over extended time periods.

LIST OF FIGURES

Figure 1 shows a non-limiting example of a use according to the present invention: one or more rod-shaped PCM bodies are placed inside a paint-filled paint container, in which they can optionally be used as a temperature-controlling stirring bar.

In Figure 2 a paint container is placed in a second, larger container in which a PCM body, conditioned at its melting point, is placed on the bottom of the second can;

Figure 3 shows another embodiment, wherein a paint can is placed in a second, larger can with a PCM body aligned to its inner walls.

Further details are provided below.

DETAILED DESCRIPTION OF THE INVENTION

In one aspect, the invention thus pertains to the use of phase change material (PCM) for heat-controlling the viscosity of paint for brush, pad or roller application. With "heat-controlling" it is meant that the PCM can control the paint temperature within a desired range, correcting for the cooler or warmer ambient conditions. The PCM is found particularly useful in cases of low ambient temperature.

In another aspect the invention pertains to improving the visual appearance of paint layers applied at low or high, in particular low ambient temperatures, by preheating (or precooling) the paint before application.

The invention also pertains to a solid body containing PCM for controlling the temperature, i.e. heating or cooling, in particular heating, a paint container containing paint for brush, pad or roller application.

Viscous liquid

Although it is the inventors' belief that the latent heat release of rechargeable PCM according to the present invention may be beneficial to all kinds of viscous materials that would otherwise suffer from e.g. reduced applicability, stirrability or pouring properties, the present invention especially relates to brush, pad or roller-applicable paints. The term "paint" includes varnish, lacquer and coatings. The temperature control provided by a proper selection of PCM improves applicability, brushing etc.

Additionally, it has been found that the visual appearance of paint layers also benefits from the temperature control provided by the present invention.

Phase change material

In the context of the invention, a phase change material (PCM) is a substance, having a high heat of fusion, which: 1) upon temperature adjustment, e.g. heating, undergoes a phase transition at a specific single temperature or within a specific temperature interval within a desired temperature range, thereby absorbing large amounts of heat without significantly rising in temperature, and 2) in different temperature conditions, e.g. cooling, returns to its original state of matter, releasing its stored latent heat energy at or near its phase transition point or interval, in a controlled manner. In the field of the invention, it is desired to accomplish such temperature release in the range of 10 - 60 °C, more preferably 15 - 50 °C, more preferably at least 20 °C, in particular at least 25 °C. In summary, the PCM should have a transition point or range within the desired range. Its preferred that the phase change is a heat-seeking (endothermic) process.

Obviously, if the ambient temperature surrounding the PCM is actually higher, the PCM may function as a cooling element. Here below, this is accounted for by "heat transfer", and related terms. However, its favored function is that of a heating element.

Although not wishing to be tied down to any theory, in physical terms, the sensible heat, i.e. the temperature change of the material itself, is augmented by the latent heat, i.e. the melting enthalpy, of the PCM. The latent heat is added upon 'charging' the material with an external heat source, resulting in the melting of the PCM, and is released again when the material congeals at lower temperatures. The heat storage capacity can be calculated using the following equation

$$Q = (m \cdot c_p \cdot \Delta T)_{PCM} + (m \cdot \Delta h_{melt})_{PCM}$$

| | |
|---|---|
| Q | amount of heat [kJ] |
| m | mass of PCM [kg] |
| $c_p$ | specific heat capacity of PCM [kJ·kg$^{-1}$·K$^{-1}$] |
| $\Delta T$ | temperature difference of storage material with surroundings [K] |
| $\Delta h_{melt}$ | specific melting enthalpy (heat of fusion) of PCM [kJ·kg$^{-1}$] |

The heat storage capacity, the relative amount of heat absorption or release when the material undergoes a transition change, preferably a phase change from solid to liquid or liquid to gas or vice-versa, is usually expressed as the amount of heat that is stored per kilogram over a particular predefined temperature range $\Delta T$. For instance, a PCM with a melting point of 35 °C, specific heat capacity of 2.1 kJ·kg$^{-1}$·K$^{-1}$ and a melt enthalpy of 140 kJ/kg, possesses a heat storage capacity between 30°C and 40 °C of 161 kJ/kg. Depending on the specific choice of material or materials combinations, the operating temperature and heat storage capacity range can be effectively tuned. Furthermore, phase change essentially being a reversible process, this enables the PCM to be thermally 'recharged' by an external heat supply.

In the context of the invention, PCMs are particularly attractive when operating at relatively small working temperature differences (ΔT < 40 °C, more preferably ΔT < 30 °C, most preferably ΔT < 20 °C), provided that the latent heat storage goes through its phase change within this working temperature difference.

Although PCMs can exist in the gaseous, liquid or solid state depending on the temperature and pressure of the material, it is preferred to use PCM having a solid-liquid phase transition within the above-mentioned temperature range, since its transition is conveniently accompanied by minimal volume changes, compared with liquid-gas and solid-gas transitions.

While the term "PCM" is regarded clear as it stands in the prior art, for sake of completeness it is repeated here that its broad definition also encompasses those transitions induced by artificial nucleation, requiring an additional means to trigger, such as in case of super-cooled, super-saturated recrystallizable salt liquids and solutions, where recrystallization of said super-cooled super-saturated recrystalizable liquids or solutions is required.

In one embodiment, the PCM includes only those materials having a transition within the desired temperature range and controlled energy release without (mechanical) intervention.

The preferred solid-liquid phase change materials (PCMs) may comprise organic and inorganic materials, or mixtures thereof. Inorganic PCMs comprise hydrated salts, salt hydrate eutectics, ionic liquids and zeolites. A eutectic is a minimum melting composition of two or more components, each of which melts and freezes congruently, forming a mixture of the component crystals during crystallization. Examples are sodium sulfate decahydrate (Glauber's salt), magnesium or calcium chloride hexahydrate, or magnesium nitrate hexahydrate-magnesium chloride hexahydrate eutectic. Hydrated salts and salt hydrate eutectics have the advantage that they generally exhibit a larger phase change enthalpy (melting enthalpy) than organic PCMs.

Organic PCMs can be chosen from the group consisting of linear crystalline alkyl hydrocarbons, alkyl hydrocarbon waxes, fatty acids and esters, linear crystalline primary alcohols, ethylene copolymers, polyethylene glycol, polyethylene oxide, acetamide and clathrate hydrates. Preferred organic PCMs comprise one or more organic compounds selected from the group consisting of paraffinic hydrocarbons (linear crystalline alkyl hydrocarbons), which are low-cost by-products of petroleum refining, since these exhibit high thermal energy storage capacity (150-300 kJ/kg), are abundantly present, self-nucleating (no supercooling), stable towards repeated thermocycling, non-toxic, ecologically harmless and chemically inert, and their melting temperatures can well be adjusted to any desired value from well below 0 °C to above 100 °C, thus including the desired range of the invention.

Although salt hydrates are popular PCMs for thermal energy storage because of their high value of latent heat, many of these substances are prone to supercooling, which for normal applications is problematic as it prevents the release of the stored latent heat. However, in one embodiment supercooling properties are in fact favored, since it presents an advantageous opportunity to store thermal energy for prolonged periods of time without heat loss, while the supercooled PCM liquid is kept at ambient temperature. Generally, such supercooled PCM salts are present as super-cooled, super-saturated recrystallizable salt solutions in e.g. purified water, in the presence of a nucleating agent, i.e. means for triggering the transition, preferably crystallization of the PCM. The nucleating agent may be activated manually. Activation of the nucleating agent initiates the crystallization of the supercooled salt hydrate by means of e.g. metal strip flexing or using a seed crystal. The nucleating agent makes direct contact with the PCM. Hence, in an embodiment, the PCM comprises a supercoolable super-saturated recrystallizable salt solution, optionally making contact with a nucleating agent. The skilled person will know how to select the proper nucleating agent from the art.

For heating of paint to temperatures corresponding to optimum viscosity properties, the PCM should have a transition temperature, preferably melting temperature, in the range of 10-60 °C, more preferably in the range of 15 - 50 °C, most preferably at least 20 °C, in particular at least 25 °C. The term "transition temperature" also stands for "transition range", provided that this transition range lies within the aforementioned range.

The heat storage capacity of the PCM within the aforementioned temperature range is preferably at least 100 kJ/kg, more preferably at least 125 kJ/kg.

An example of an organic paraffinic PCM according to the present invention is Rubitherm® RT 31 (Rubitherm Technologies GmbH, Germany), which comprises saturated hydrocarbon wax with a melting/congealing point of 31 °C and a heat storage capacity (in the range 19-34 °C) of 169 kJ/kg.

Another suitable example of inorganic PCM is sodium acetate trihydrate, melting at 54 °C, crystal-free at 79 °C. Yet another example is disodium hydrogen phosphate dodecahydrate, and STL-47, a commercially available sodium acetate eutectic. Lists of inorganic and organic PCMs are given in Sharma et al. "Latent heat storage materials and systems: a review" Int. J. Green Energy 2: 1 - 56 (2005).

PCM body

The invention also pertains to a body for temperature controlling the paint for brush, pad or roller application, said body containing PCM, wherein the PCM is completely covered or shielded by a shell or shielding layer comprising or consisting of a solid material. The shell layer prevents direct contact between PCM and the surroundings, in particular the paint. The shell layer functions as a moisture-impermeable outer layer. Inevitably, the shell layer is free from PCM.

The PCM-containing body preferably contains at least 50 vol% of the active temperature controlling material, i.e. PCM or supersaturated PCM solution, more preferably at least 80 vol%.

As mentioned above, the PCM-containing body may further comprise a nucleating agent in contact with the PCM.

Although not limited thereto, the PCM-containing body may be in the form of a disk, a cylinder, a rod or a sphere. These special embodiments and their advantages will be discussed further below. However, it is also possible to apply different forms, such as sachets, pouches.

The shell layer is preferably durable, leak-proof and/or fatigue-resistant. It prevents the passage of the PCM through the walls. It furthermore acts as a barrier to the medium to be heated and precludes the passage of oxygen and subsequent oxidation. Hence, there is no direct physical contact between PCM and the surroundings, in particular the paint.

The shell layer can be rigid or flexible, thus making the PCM-containing body itself rigid or flexible. When the shell layer is flexible, shapeable or bendable, it makes it possible to conveniently shape the body around a paint container to increase the contact surface to improve the heat exchange, e.g. as a wrap or a lining for a second container. An interstitial material layer (liquid or gel, e.g. water or thermal grease) can be applied to realize heat transfer enhancement.

Preferred materials for use in the shell layer are stainless steal, aluminum, rubber, vinyl and reasonably thermally conductive plastics such as polyethylene, polypropylene or polyester. Combinations of these materials, such as in aluminized polymer film, are also possible. A preferred material is high-melting HDPE.

Obviously, the shell layer is not to be confused for a microencapsulating layer such as disclosed in e.g. US 4,825,939.

Inevitably comprised in the term "body", the body is of manageable dimensions, having at least one dimension of at least 1 cm.

As mentioned above, it is an essential part of the invention that direct contact between PCM and the viscous liquid is avoided.
The latent heat energy storage material may be rechargeable with heat energy from a heat source that may include conduction, convection, radiant heat, electrical resistance or inductance, microwave heat or radio frequency. Preferably, the latent heat energy storage unit is thermally chargeable in a hot water bath or an electrically operated, insulated heating box. This is e.g. a commonly available portable device capable of heating up to 60 °C using the 12V power outlet of a car, and can as such be placed in the vehicle of the painter-decorator.

The aforementioned PCM bodies comprising a supercoolable salt solution have the advantage that these - when supercooled - are in thermal equilibrium with the ambient surroundings. Hence, storage in an isolated heating box is not required, and the temperature change of the paint is effected on demand by manually triggering the salt crystallization, resulting in an instantaneous temperature rise of the PCM body. Conveniently, the heat transfer may be initiated by activating the nucleating agent. Means for doing so are known in the art.

Generally, since the latent heat-releasing PCM-containing body is suitable to be incorporated in or attached to a standard paint container, no structural changes in the painting ritual of the painter/decorator are to be expected.
In one part of the invention, the PCM-containing body may be in direct contact with the viscous liquid, as discussed below for two specific embodiments.

Embodiment I

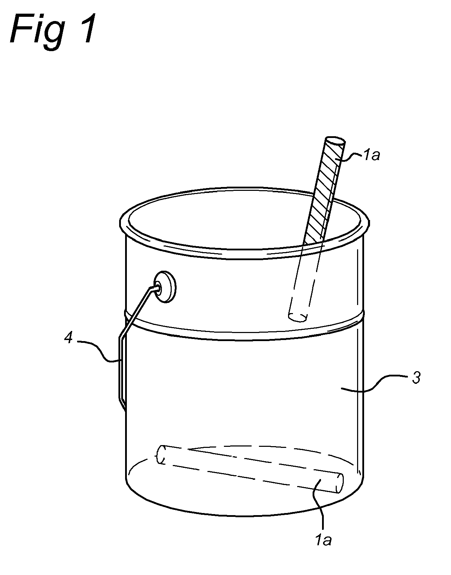

In this embodiment, the PCM-containing body according to the invention is rod-shaped. An example is given in Figure 1. The dimensions of the PCM-filled rod **1a** are such that it can be placed substantially vertically in a paint container 3. As such, the PCM-containing body can conveniently also be applied as an, optionally removable, paint-heating or -cooling stirring bar, enabling close thermal contact between said body and the paint.

The shell or shielding layer is made of a material that does not interact with, i.e. chemically modify, the viscous liquid it makes contact with, and is preferably easy to cleanse.

It is possible to use one or more of such paint heating or cooling rods la together. Conveniently, heat transfer between the PCM-containing body and the viscous liquid may be promoted by stirring. For that purpose, the body may advantageously be supplied with a handling or grip portion, or may be removably attached to such a handling or grip element. Once the viscous liquid is quickly brought to the desired temperature, one or more PCM-containing bodies may be inserted or left in the paint-filled paint can/container, as demonstrated in figure 1A.

An advantage of this embodiment is that a viscous liquid can be very rapidly (within ca. 5 minutes) heated from low temperature (ca. 5 °C) to a temperature for optimum application.

Embodiment II

In this embodiment, a multitude of PCM-containing bodies is used, preferably held together in an optionally disposable bag. This bag may be suspended in the paint container containing the paint. The bag may be closable. Again, this embodiment enables close thermal contact between said bodies and the paint. The bag is made of material that does not modify the paint.

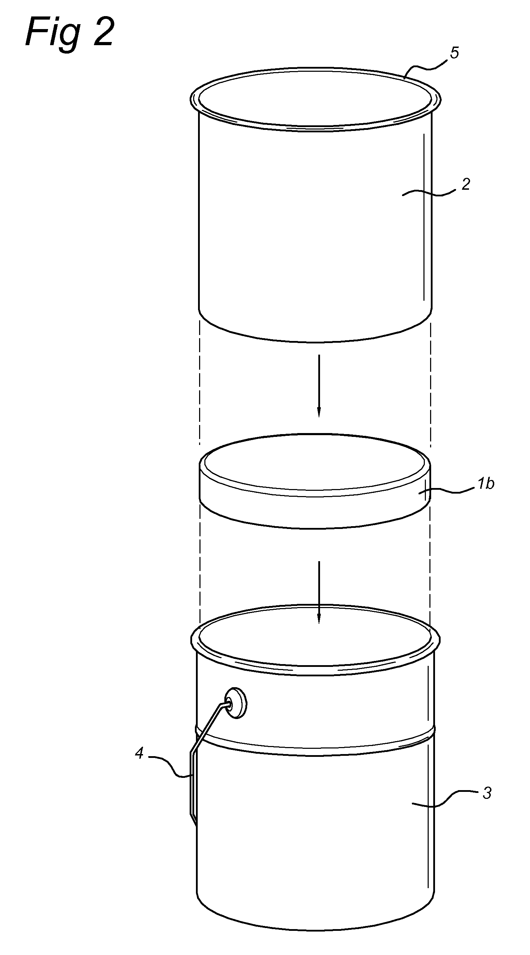

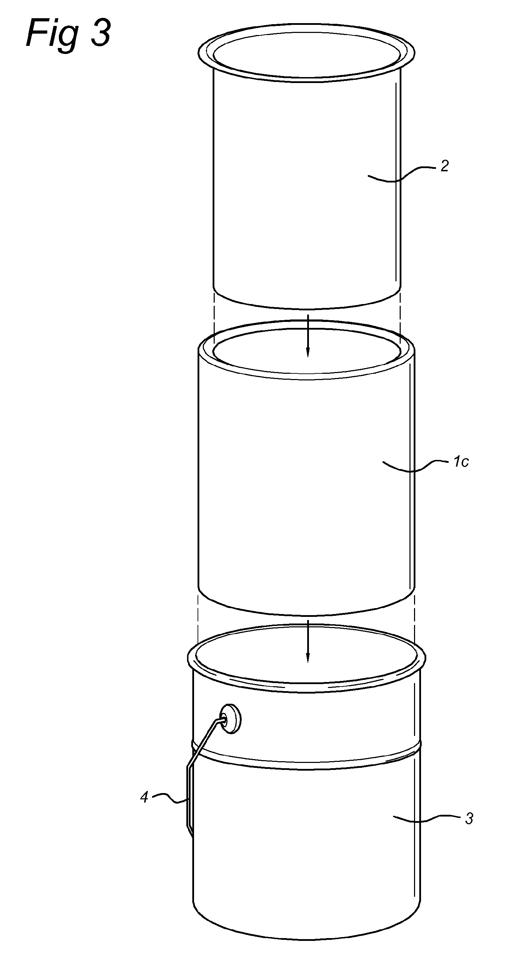

The dimensions of the PCM-containing bodies are chosen such that multiple bodies can be housed in the paint container. The PCM-containing bodies may be in any manageable shape, e.g. substantially spherical. In the above embodiments the PCM-containing body makes direct contact with the viscous liquid. In another part of the invention, the PCM -containing body of the invention makes it possible to control the temperature of the viscous liquid without having to incorporate the body into the viscous liquid. This will be detailed in non-limiting embodiments III and IV and accompanying figures 2 and 3. In such case, use can be made of a special container:

Container

Thus, the invention also pertains to a container containing paint for brush-, pad- or roller-application, wherein at least part of the outside of the container makes direct contact with a PCM-containing body according to the invention.

The paint container is preferably removably contained in a portable second container, and said body being located in-between the outside of the first container and the inside of the second container. The sides of the body that make contact with the second, outer container are preferably thermally insulated in order to reduce thermal energy losses to said outer container and adjacent air. One of the advantages of the use of a second, outer container is that it may conveniently be equipped with a means for holding said container, such as a handle. For handling purposes, the body is preferably also removably positioned in the second container. The PCM-containing body may be designed such that its shielding layer is thermally isolated at all sides but the one making contact with the paint can, thus minimizing energy loss to the ambient, and optimizing the heat transfer to the paint can and its contents.

Embodiment III

In this embodiment, represented schematically in Figure 2, the PCM-containing body according to the invention is in the form of a disk **1b.** The perimeter of the disk preferably largely corresponds to the perimeter of the container for the paint 2, thereby maximizing the contact interface between the heating body and the paint and reducing energy losses due to heat transfer to air. It is preferred that the disk has a perimeter which is 75 - 100 % of the perimeter of the container of the paint. In absolute terms, the thickness preferably has a perimeter of at least 8 cm.

The PCM-containing body is positioned at the bottom of a second larger container 3, and the container with the viscous liquid is placed thereon. Hence, the inner container rests on the disk. The shape of the disk may conveniently be in the shape of a standard-size paint can, which is usually cylindrical.

The overall thickness of the disk is large enough to accommodate a volume of the latent heat energy storage material that allows sufficient conductive heat transfer to the paint. The disk has preferably a thickness of at least 1.0 cm, more preferably at least 1.5 cm, more preferably less than 5 cm thickness. The latent-heat-energy transferring disk can be an integrated part of the outer paint container. Preferably, however, the disk is removably placed in the container in order to allow convenient recharging of the PCM-containing body in aforementioned heating box or hot water bath.

A person skilled in the art will be able to determine, depending on the specific heat capacities, thermal conductivities and melt enthalpies of other suitable PCMs, the design adaptations required for optimizing the geometry of bodies containing said PCMs for most favorable conductive heat transfer. For example, for a spherical disk having a diameter corresponding to the diameter of a cylindrical standard-size paint can, i.e. 15 cm, containing a PCM that melts/congeals at 31 °C and with a specific heat capacity of $2.1 \text{ kJ·kg}^{-1}\text{·K}^{-1}$, a thermal conductivity of $0.2 \text{ W·m}^{-1}\text{·K}^{-1}$ and a melt enthalpy of 140 kJ/kg, it can be calculated that, assuming common values for the thermal conductivity, specific heat, heat transfer coefficient and density of organic liquids such as paint solvent, a PCM mass of at least 0.26 kg is required to maintain said filled paint can at a temperature of 22 °C at a surrounding temperature of 5 °C during 5 hours. Assuming a shell layer made of HDPE with 0.8 cm shell thickness, this corresponds to a total disk thickness of 1.9 cm.

For handling purposes, the second container may be supplied with a handle 4, and/or the first container may be provided with a rim 5.

Embodiment IV

In another embodiment, depicted in Figure 3, the paint-heating PCM-containing body has the shape of a cylinder **1c,** optionally bottomed. Alternatively, the PCM-containing body is made of a flexible or shapeable material and may thus be formed into such a cylinder. In this embodiment, the PCM-containing body may be referred to as a wrap, or, if contained in a second larger container, as a lining. Its shape makes it possible to place or wrap it around a substantial part of the paint container. Obviously, it preferably covers at least the part of the container holding the liquid. This shape increases the available contact surface area between the PCM-containing body and the paint.

The thickness of the walls of the cylinder and its optional bottom are chosen such that they can house a volume of PCM that warrants sufficient conductive heat transfer to the paint. The cylinder has a perimeter which is slightly larger than that of the smaller paint container.

As a lining, the PCM-containing body can be an integrated part of a second container, attached thereto, or, preferably, can be removably positioned in the container in order to allow convenient recharging of the body. Obviously, the invention is not limited to the particular embodiments disclosed above. Moreover, different embodiments may be combined.

The invention also pertains to a process for controlling the viscosity of brush-, pad- or roller-applied paint, comprising:

> a. heating a body containing PCM according to the invention to a temperature exceeding the transition temperature of said PCM;
> b. bringing said heated body into thermal contact with a paint-filled container,

step b) optionally preceded by activation of a nucleating agent, thus initiating heat release by the PCM,
to control the temperature of said paint at a temperature in the aforementioned range.

In one embodiment, the heated body provided in step b) is present in a portable second container, wherein said paint-filled container is placed inside the portable second container.

Sensible heat transfer

Although within the framework of the present invention phase change materials are the preferred means for administering heat to paint for decreasing its viscosity, we envisage that the thermal energy released by other materials known in the art for their heat-retentive properties, such as cherry pits, (wet) sand, corn, rice, wheat, oats, barley, beans and flaxseed may be used, provided that these release the majority, preferably more than 80 % of their heat in the preferred temperature range.

EXAMPLE 1

A disk-shaped body was prepared comprising a shell of high-density polyethylene (HDPE) and a center of a PCM composition. The thickness of the HDPE shell was about 0.8 mm. The diameter of the disk was 15 cm, while its height was 2 cm. The disk was filled with 260 g of Rubitherm® RT 31 (Rubitherm Technologies GmbH, Germany), which has melting point at 31 °C and a specific heat capacity of about 2 kJ·kg-1·K-1. The PCM-containing body was heated at about 40 °C during 3 hours in a portable travel cooling/heating box operating at 12V. After removal from the heating box, the disk was positioned at the bottom of an empty container, while subsequently, resting on the disk-shaped PCM-containing body, a smaller container was placed inside, containing viscous paint at about 5°C. Latent heat from the PCM-containing body was transferred to the paint-filled container, producing a temperature rise of the paint to about 21°C, which temperature was maintained for 3 hours.

EXAMPLE 2

Three rod-shaped bodies were prepared comprising a shell of high-density polyethylene (HDPE) and a center of a PCM composition. The thickness of the HDPE shell was about 0.8 mm. The length of the rods was 20 cm, while its diameter was 2.4 cm. The rod was filled with 0,13 kg sodium acetate trihydrate (heat of fusion ≈ 200kJ/kg, density 1450 kg/m$^3$), and inside was a triggering mechanism.

The three rods were activated by pressing, thus activating the nucleating agent. Two were inserted in the paint-filled container, while one rod was stirred through the viscous liquid for 10 minutes, thereby making use of the integrated stirring/heating function). After 10 minutes, the liquid was at the right viscosity and temperature. Stirring was stopped, one rod was left in the can to maintain the temperature at the desired level for another 3 hours.

**Claims**

1. Use of phase change material (PCM) for heat-controlling the viscosity of paint for brush, pad or roller application.

2. A body for controlling the temperature of paint for brush, pad or roller application, said body containing phase change material (PCM), wherein said PCM is shielded from the surroundings by a shell layer.

3. The body according to claim 2, wherein said PCM has a transition temperature within the range of 10-60 °C.

4. The body according to claim 2 or 3, wherein said PCM has a heat storage capacity in said temperature range of at least 100 kJ/kg.

5. The body according to any one of claims 2 - 4, having at least one dimension of at least 1 cm.

6. The body according to claim 5, which is in the form of a disk, a cylinder, a rod or a sphere.

7. The body according to any one of claim 2 - 6, wherein said shell layer is flexible.

8. The body according to any one of claims 2 - 7, said PCM comprising a supercoolable super -saturated recrystallizable salt solution, preferably in direct contact with a nucleating agent.

9. Use of the body according to any one of claims 2 - 8 for heat-controlling the viscosity of paint for brush, pad or roller application.

10. Use according to claim 9, wherein temperature of said paint is maintained in the range of 10- 60 °C.

# Fig 1

*Fig 2*

# Fig 3

## EUROPEAN SEARCH REPORT

Application Number

EP 07 12 0371

European Patent
Office

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 00/05970 A (FRISBY TECHNOLOGIES, INC.) 10 February 2000 (2000-02-10) | 2-8 | INV. B44D3/00 |
| Y | see abstract<br>* page 1, line 4 - page 5, line 31 *<br>* page 13, line 18 - page 15, line 20 *<br>* page 20, line 3 - page 23, line 10 * | 1,9,10 | B44D3/12<br>F28D20/02<br>C09K5/06 |
| Y | US 3 885 843 A (GEORGE K. E. RUBEL) 27 May 1975 (1975-05-27)<br>* the whole document * | 1,9,10 | |
| A | US 5 983 437 A (GEORGE H. WAKAT) 16 November 1999 (1999-11-16)<br>* the whole document * | 1-10 | |
| A | WO 02/48271 A (BHP ATEEL (JLA) PTY LTD ET AL.) 20 June 2002 (2002-06-20)<br>* the whole document * | 1-10 | |
| A | WO 03/085346 A (OMNOVA WALLCOVERING (UK) LIMITED ET AL.) 16 October 2003 (2003-10-16)<br>* the whole document * | 1-10 | TECHNICAL FIELDS SEARCHED (IPC)<br><br>B44D<br>C09K<br>F28D |
| A | US 6 619 049 B1 (CHIEH-JEN WU) 16 September 2003 (2003-09-16)<br>* the whole document * | 1-10 | |
| A | EP 1 006 344 A (KIKUSUI CHEMICAL INDUSTRIES CO., LTD.) 7 June 2000 (2000-06-07)<br>* the whole document * | 1-10 | |
| A,D | US 6 373 058 B1 (RICHARD A. MCKINNEY ET AL.) 16 April 2002 (2002-04-16)<br>* the whole document * | 1-10 | |

-/--

The present search report has been drawn up for all claims

| Place of search | Date of completion of the search | Examiner |
|---|---|---|
| Munich | 11 April 2008 | Greiner, Ernst |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 07 12 0371

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 4 825 939 A (IVAL O. SALYER ET AL.) 2 May 1989 (1989-05-02) * the whole document * ----- | 1-10 | |
| | | | **TECHNICAL FIELDS SEARCHED (IPC)** |

The present search report has been drawn up for all claims

| Place of search | Date of completion of the search | Examiner |
|---|---|---|
| Munich | 11 April 2008 | Greiner, Ernst |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 12 0371

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2008

| Patent document cited in search report | | Publication date | Patent family member(s) | | Publication date |
|---|---|---|---|---|---|
| WO 0005970 | A | 10-02-2000 | AT | 288319 T | 15-02-2005 |
| | | | AU | 5001599 A | 21-02-2000 |
| | | | DE | 69923566 D1 | 10-03-2005 |
| | | | DE | 69923566 T2 | 16-02-2006 |
| | | | EP | 1100342 A1 | 23-05-2001 |
| | | | JP | 2002521186 T | 16-07-2002 |
| | | | US | 6099894 A | 08-08-2000 |
| | | | US | 6171647 B1 | 09-01-2001 |
| | | | US | 6270836 B1 | 07-08-2001 |
| US 3885843 | A | 27-05-1975 | GB | 1465245 A | 23-02-1977 |
| US 5983437 | A | 16-11-1999 | AU | 722031 B2 | 20-07-2000 |
| | | | AU | 3151897 A | 05-01-1998 |
| | | | BR | 9709481 A | 16-05-2000 |
| | | | CA | 2255878 A1 | 04-12-1997 |
| | | | EP | 0901409 A2 | 17-03-1999 |
| | | | NZ | 332956 A | 28-07-2000 |
| | | | US | 6022588 A | 08-02-2000 |
| | | | WO | 9745204 A2 | 04-12-1997 |
| | | | US | 5713095 A | 03-02-1998 |
| WO 0248271 | A | 20-06-2002 | AT | 333928 T | 15-08-2006 |
| | | | AU | 2133002 A | 24-06-2002 |
| | | | CA | 2431085 A1 | 20-06-2002 |
| | | | CN | 1486350 A | 31-03-2004 |
| | | | DE | 60121818 T2 | 28-12-2006 |
| | | | EP | 1358277 A1 | 05-11-2003 |
| | | | JP | 2004524386 T | 12-08-2004 |
| | | | MX | PA03005194 A | 26-03-2004 |
| | | | US | 2004048953 A1 | 11-03-2004 |
| WO 03085346 | A | 16-10-2003 | AU | 2003303940 A1 | 17-02-2005 |
| | | | CN | 1643328 A | 20-07-2005 |
| | | | EP | 1490642 A1 | 29-12-2004 |
| | | | JP | 2006512520 T | 13-04-2006 |
| | | | ZA | 200408805 A | 18-05-2005 |
| US 6619049 | B1 | 16-09-2003 | NONE | | |
| EP 1006344 | A | 07-06-2000 | DE | 69906223 D1 | 30-04-2003 |
| | | | DE | 69906223 T2 | 05-02-2004 |
| | | | US | 6502049 B1 | 31-12-2002 |
| US 6373058 | B1 | 16-04-2002 | NONE | | |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 07 12 0371

11-04-2008

| Patent document cited in search report | Publication date | Patent family member(s) | Publication date |
|---|---|---|---|
| US 4825939 A | 02-05-1989 | NONE | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4825939 A

- US 6373058 B

**Non-patent literature cited in the description**

- **SHARMA et al.** Latent heat storage materials and systems: a review. *Int. J. Green Energy,* 2005, vol. 2, 1-56